Europäisches Patentamt

European Patent Office

Office européen des brevets

(11) Publication number: **0 062 716**
**B1**

## (12) EUROPEAN PATENT SPECIFICATION

(45) Date of publication of patent specification: **28.08.85**

(21) Application number: **81301658.1**

(22) Date of filing: **15.04.81**

(51) Int. Cl.⁴: **B 01 J 8/12,** B 01 J 8/02, E 21 B 43/08

(54) Improved screen for collection and distribution of process streams and assembly of such screens.

(43) Date of publication of application:
**20.10.82 Bulletin 82/42**

(45) Publication of the grant of the patent:
**28.08.85 Bulletin 85/35**

(84) Designated Contracting States:
**DE FR GB**

(56) References cited:
**DE-A-2 114 336**
**DE-A-2 835 820**
**US-A-2 387 725**
**US-A-3 222 040**
**US-A-4 068 713**
**US-A-4 096 911**

(73) Proprietor: **UOP Inc.**
**10 UOP Plaza Algonquin & Mt. Prospect Roads**
**Des Plaines Illinois 60016 (US)**

(72) Inventor: **Gillespie, George Alexander**
**10191 Nightingale Street**
**Coon Rapids Minnesota (US)**

�==Representative: **Newby, John Ross et al**
**J.Y. & G.W. Johnson Furnival House 14/18 High Holborn**
**London WC1V 6DE (GB)**

Courier Press, Leamington Spa, England.

**Description**

The invention relates to screens for use in process flow stream applications where a significant pressure drop through the screen is often essential to provide adequate distribution. This use is quite different from well screen applications where it is usually desirable to maximize the amount of open area and provide a minimum pressure drop. An example of a conventional well screen can be seen in US—A—2,046,458 wherein a profiled wire is helically wrapped around a plurality of longitudinal rods and welded to each one so as to define a screen member having slots of a predetermined width between the successive wraps of wire. Where it is desired to use such a screen in an application requiring a substantial pressure drop through the screen member, some of the slots may be welded closed or a perforated pipe or a plate that has been punched and rolled can be mounted inside the screen member. US—A—4,096,911 discloses a cylindrical well screen which incorporates a plurality of apertured channel members having short leg portions which are welded to each wrap of wire, the area of the apertures preferably being at least as great as the open area of the slots defined between the wire wraps. The channels are positioned longitudinally of the cylindrical screen member and parallel to its axis so as to resist large torsional loads in deep drilling which might destroy a screen member of the convention rod and wire type.

A typical example of a process application where a screen is used to retain catalyst particles is the moving bed reactor shown in US—A—3,706,536. In Figure 9 of this patent specification a screen member is shown as being backed up with a perforated baffle plate. The slots in the screen member are sized to retain the catalyst and the baffle plate has perforations which distribute the reactant stream uniformly through the system and control its flow rate. The open areas of the screen member and plate could rarely be the same since it is by having a smaller open area in the baffle plate that a sufficient back pressure is built up in the reactant stream to cause the stream to contact all of the catalyst uniformly. A similar need to retain particles and control distribution would also occur in a fluidized bed. Although it is theoretically possible to make the slots in the screen member small enough to provide a significant pressure drop, it would be very difficult and expensive to achieve very small openings and such small openings might be very susceptible to clogging.

The present invention seeks to provide an efficient, strong, lightweight screen for use in collecting a process flow steam and distributing it uniformly. According to the invention, a screen member for collecting a process flow stream and inducing a pressure drop therein which will cause it to be distributed substantially uniformly, comprising a plurality of spaced apart profiled elements fixedly mounted relative to each other so as to define a plurality of slots through which the process stream can pass; a plurality of channel members positioned generally normal to said profiled elements, each of said channel members having a pair of integral leg portions welded to each of said profiled elements; aperture means formed in said channel members, the outer edge of each leg portion of each of said channel members being positioned so close to the outer edge of a leg portion of the adjacent channel member that substantially all the process stream will flow through said aperture means: is characterised in that the total open area of said aperture means is less than the total open area of said plurality of slots.

Thus a screen member in accordance with the present invention comprises one surface portion made of a plurality of profiled elements and a support portion made of a plurality of channel members which have legs which abut each other and are welded to each of the profiled elements. The open area for stream flow on the channel side of the screen member is less than the open area of the slots defined by the profiled elements. Where the screen member is used in cylindrical form, the profiled elements are parallel to the screen axis while the channels are arranged in a hoop-like manner with their ends welded together which makes the cylinder extremely resistant to collapse.

The invention will now be further described, by way of example, with reference to the accompanying drawings, in which:—

Figure 1 is a fragmentary, partially broken away, perspective view of a portion of a radial flow catalytic reactor utilizing two channel-based screen members made in accordance with the present invention,

Figure 2 is a fragmentary view of a prior art channel-based well screen,

Figure 3 shows a channel-based screen member which has been initially formed in a fashion similar to the screen member of Figure 2 and then flattened,

Figure 4 shows the screen member of Figure 3 after it has been rerolled at right angles with the channels on the inside,

Figure 5 is a cross-section taken on line 5—5 of Figure 4,

Figure 6 shows a screen member in accordance with the invention of a type useful in a fluidized bed, for example, and

Figure 7 is a view similar to Figure 4 where the screen member of Figure 3 has been rerolled with the channels on the outside.

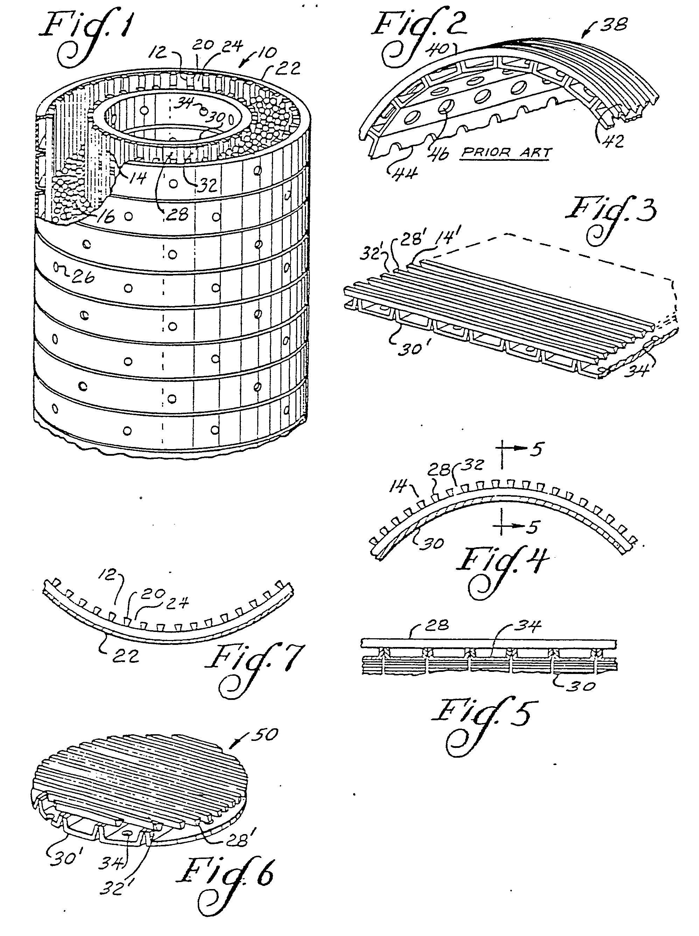

Figure 1 illustrates the use of a pair of screen members in accordance with the invention in a radial flow catalytic reactor, a portion of which is indicated generally at 10. The reactor includes an outer screen member 12 having an inwardly facing screen surface and an inner screen member 14 having an outwardly facing screen surface. Catalyst, in the form of pellets 16 or other shapes, is contained between the confronting screen surfaces. The catalyst is retained against outward radial movement by profiled wires or elements 20 which are welded to channel shaped members 22 at a uniform spacing to define flow passages or slots 24, as more clearly seen in Figure 7. For clarity in the drawing, the slots 24 are shown to be wider than they would actually be for the size of pellets 16 shown in Figure 1. For example, a typical pellet 16 would have a diameter of 1.58 mm (0.062″) while the slot openings 24 would be about 0.76 mm (0.030″). The profiled wire 20 would typically have a flat pellet engaging surface having a width of about 2.29 mm (0.090″) and a depth of about 3.81 mm (0.150″). The side walls would have about a 13° taper angle and the members 22 could be about 12.7 mm (0.500″) wide and 9.53 mm (0.375″) high with a metal thickness of about 0.355 to 0.406 mm (14—16 gauge).

Gas stream flow through a reactor of the type shown in Figure 1 is typically in a radially inward direction. To distribute the gas stream flow uniformly through the entire bed of catalyst pellets 16, it is necessary to create a small degree of back pressure on the inlet side of the bed or on the outlet side. Back pressure on the inlet side can be accomplished by sizing and spacing inlet apertures 26 in the outer screen member 12 so that their total area will be less than the total area of the slots 24. Thus, approximately the same volume of the flow will pass through each of the many apertures 26 and be diffused by the slots 24 and the pellets 16 adjacent to said slots.

The pellets 16 are retained against inward radial movement by the screen member 14 which comprises profiled elements 28 which are supported by a plurality of channel shaped members 30 to which they are welded so as to define slots 32. When back pressure is produced by the apertures 26 in the inlet screen member 12, the area of apertures 34 in the downstream screen member 14 should preferably be greater than the area of the upstream apertures 26 so that no unnecessary back pressures are introduced. However, it is greatly preferred to have back pressure controlled by the smaller diameter inner screen member since it is less costly to do so. Thus, in Figure 1, where the stream is flowing radially inwardly, the total area of the apertures 34 would be less than the total area of the apertures 26. The profiled elements 20 and 28 are shown as being parallel to the axis of the reactor 10. This arrangement is quite important, especially in a moving bed reactor wherein it is desirable to move the catalyst pellets 16 downwardly through the reactor by the action of gravity with a minimum of attrition. The screen members 12, 14 are preferably rolled to the shape shown in Figure 1 from a flat configuration and have the ends of all of the channel-shaped members 22, 30 welded to each other so as to greatly enhance the hoop strength of the screen members and their resistance to collapse from system pressures or the weight of the catalyst as compared to prior art screen members having wire supports.

Figure 2 illustrates a prior art well screen 38 disclosed in US—A—4,096,911 which is made by helically wrapping and simultaneously welding a length of profiled wire 40 to leave screen openings or slots 42 about a plurality of axially parallel channel members 44 which include apertures 46 which preferably have an open area greater than the area of the slots. The flow through such a screen is normally from the outside to the inside.

Figure 3 illustrates a flat screen element 14′ which may be rolled with its profiled elements 28′ facing outwardly and welded to form the cylindrical screen element 14 shown in Figures 1, 4 and 5; rolled with the elements 28′ facing inwardly to form the cylindrical screen element 12 shown in Figures 1 and 7; or used flat as shown at 50 in Figure 6. The flat screen element 14′ could be formed by welding a plurality of straight lengths of the profiled elements 28′ to the channel members 30′ having apertures 34 preformed therein or by wrapping and welding a profiled wire to first produce a configuration similar to that shown in Figure 2, cutting the resulting cylinder parallel to its axis, and flattening it.

Figure 6 shows a circular flat screen element 50 which could be formed by cutting the flat screen element 14′ of Figure 3. Such a screen element is quite useful as a bottom support deck in a fluidized bed, for example. In such a unit there is a need for a back pressure to be created to ensure even distribution of the gases passing upwardly through the slots 32′. This function is readily performed by the apertures 34. The channel members 30′ are also very important in that they can be formed by varying thicknesses of metal and varying depths to achieve any desired degree of support for the elements 28′. The integral combination of ideal slot size, ideal back pressure for uniform flow distribution and mechanical support in a single screen assembly eliminates the need for providing additional flow control plates and the additional support members required in prior art decks.

**Claims**

1. A screen member for collecting a process flow stream and inducing a pressure drop therein which will cause it to be distributed substantially uniformly, comprising a plurality of spaced apart profiled elements fixedly mounted relative to each other so as to define a plurality of slots through which the process stream can pass; a plurality of channel members positioned generally normal to said profiled elements, each of said channel members having a pair of integral leg portions welded to each of said profiled elements; aperture means formed in said channel members, the outer edge of each leg portion of each of said channel members being positioned so close to the outer edge of a leg portion of the adjacent channel member that substantially all the process stream will flow through said aperture means; characterised in that the total open area of said aperture means (26, 34) is less than the total open area of said plurality of slots (24, 32).

2. The screen member of claim 1 characterised in that said screen member is cylindrical with the profiled elements (20, 28) parallel to the axis of the cylinder and the channel members (22, 30) transverse to the axis of the cylinder, each channel member (22, 30) being endless so as to provide a hoop-like support to the screen member.

3. The screen member of claim 2, characterised in that said profiled elements (20) are on the inside of the cylinder and the channel members (22) are on the outside of the cylinder.

4. The screen member of claim 2, characterised in that said profiled elements (28) are on the outside of the cylinder and the channel members (30) are on the inside of the cylinder.

5. The screen member of claim 1, characterised in that said screen member (50) is substantially flat.

6. The screen member of claim 1, characterised in that the total open area of the aperture means (34, 26) is sufficiently small when the channel side of the screen member is upstream of the process stream so as to induce a pressure drop in the process stream which will cause it to be distributed substantially uniformly through the slots (32, 24).

7. Use of a screen member as claimed in any preceding claim for supporting a bed of particulate matter and distributing a process flow stream to the bed in a relatively uniform manner, the slots in the screen member (50, 12), having a width less than the width of the particulate matter in the bed.

8. An assembly for supporting an annular bed (16) of particulate matter and distributing a process flow stream to the bed in a relatively uniform manner, comprising a pair of concentric, cylindrical screen members (12, 14), defining the bed (16) therebetween, each of said screen members (12, 14) being as claimed in claim 1 with the screen members disposed to leave the slotted sides thereof confronting each other, characterised in that the total open area of said aperture means (26 or 34) in one of said pair of screen members (12 or 14) is less than the total open area of said aperture means (34 or 26) in the other of said pair of screen members (14 or 12) whereby one of the screen members induces a pressure drop in the process stream which will cause it to be distributed substantially uniformly through the slots which overlie the channel members of that screen member.

9. An assembly as claimed in claim 8, characterised in that the profiled elements (20, 28) of each screen member (12, 14) extend in the axial direction of the annular bed (16).

10. An assembly as claimed in claim 8 or claim 9, characterised in that the total open area of the aperture means (34) in the inner screen member (14) is less than the total open area of the aperture means (26) in the outer screen member (12).

**Patentansprüche**

1. Siebelement zum Sammeln eines Verfahrensstroms und zum Induzieren eines Druckverlusts darin, der zu einer im wesentlichen gleichförmigen Verteilung des Stroms führt, bestehend aus einer Mehrzahl gegenseitig auf Abstand angeordneter Profilelement, dass sie eine Mehrzahl vom Verfahrensstrom durchströmbarer Schlitze begrenzen, einer Mehrzahl im allgemeinen senkrecht zu diesen Profilelementen angeordneter Kanalelemente, von denen je ein Paar damit einstückiger Schenkelteile mit je einem jener Profilelemente verschweisst ist, und in diesen Kanalelementen gebildeten Oeffnungen, wobei die Aussenkante jedes Schenkelteils dieser Kanalelemente jeweils so nahe der Aussenkante eines Schenkelteils des benachbarten Kanalelements liegt, dass im wesentlichen der gesamte Verfahrensstrom durch diese Oeffnung fliesst, dadurch gekennzeichnet, dass die freie Gesamtfläche dieser Oeffnungen (26, 34) kleiner als die freie Gesamtfläche jener Mehrzahl Schlitze (24, 32) ist.

2. Siebelement nach Anspruch 1, dadurch gekennzeichnet, dass dieses Siebelement zylinderförmig und mit den Profilelementen (20, 28) parallel zur Zylinderachse und den Kanalelementen (22, 30) quer dazu ist, wobei die Kanalelemente (22, 30) jeweils endlos sind, damit sie das Siebelement reifenartig abstützen.

3. Siebelement nach Anspruch 2, dadurch gekennzeichnet, dass diese Profilelemente (20) auf der Innenseite des Zylinders und die Kanalelemente (22) auf dessen Aussenseite liegen.

4. Siebelement nach Anspruch 2, dadurch gekennzeichnet, dass diese Profilelemente (28) auf der Aussenseite des Zylinders und die Kanalelemente (30) auf dessen Innenseite liegen.

5. Siebelement nach Anspruch 1, dadurch gekennzeichnet, dass dieses Siebelement (50) im wesentlichen flach ist.

6. Siebelement nach Anspruch 1, dadurch gekennzeichnet, dass die freie Gesamtfläche der Oeffnungen (34, 26) genügend klein ist, wenn sich die Kanalseite des Siebelements stromaufwärts des Verfahrensstroms befindet, um in diesem einen Druckverlust zu induzieren, der zu einer im wesentlichen gleichförmigen Verteilung des Stroms über die Schlitze (32', 24) führt.

7. Verwendung eines Siebelements nach einem der vorhergehenden Ansprüche zum Abstützen eines Betts aus teilchenförmigen Material und zur Verteilung eines Verfahrensstroms über das Bett in verhältnismässig gleichförmiger Weise, wobei die Schlitze im Siebelement (50, 12) eine Breite besitzen, die kleiner ist als die Breite des teilchenförmigen Materials im Bett.

8. Anordnung zum Abstützen eines ringförmigen Betts (16) aus teilchenförmigen Material und zur Verteilung eines Verfahrensstroms über das Bett in verhältnismässig gleichförmiger Weise, bestehend aus einem Paar konzentrischer, zylinderförmiger Siebelemente (12, 14), die das Bett (16) zwischen sich begrenzen, wobei diese Siebelemente (12, 14) jeweils wie in Anspruch 1, beschaffen und so angeordnet sind, dass ihre geschlitzten Seiten sich gegenüberliegen, dadurch gekennzeichnet, dass die freie Gesamtfläche jener Oeffnungen (26 bzw. 34) in einem Siebelement (12 bzw. 14) dieses Paars kleiner ist als die freie Gesamtfläche jener Oeffnungen (34 bzw. 26) im anderen Siebelement (14 bzw. 12) dieses Paars, wodurch eines dieser Siebelemente im Verfahrensstrom einen Druckverlust induziert, der zu einer im wesentlichen gleichförmigen Verteilung des Stroms über die Schlitze führt, die über den Kanalelementen jenes Siebelements liegen.

9. Anordnung nach Anspruch 8, dadurch gekennzeichnet, dass sich die Profilelemente (20, 28) jeden Siebelements (12, 14) in der axialen Richtung des ringförmigen Betts (16) erstrecken.

10. Anordnung nach Anspruch 8 oder 9, dadurch gekennzeichnet, dass die freie Gesamtfläche der Oeffnungen (34) im inneren Siebelement (14) kleiner ist als die freie Gesamtfläche der Oeffnungen (26) im äusseren Siebelement (12).

**Revendications**

1. Un élément de tamis pour la collecte d'un courant de traitement et l'induction, dans celui-ci, d'une chute de pression l'amenant à être distribué de façon substantiellement uniforme, comprenant une pluralité d'éléments profilés fixes montés à une certaine distance l'un de l'autre de façon à former une pluralité de fentes à travers lesquelles le courant de traitement peut passer; une pluralité d'éléments en U disposés de façon généralement perpendiculaire aux dits éléments profilés, chacun de ces éléments en U comportant une paire de portions intégrales d'ailes soudées à chacun des dits éléments profilés; des ouvertures formées dans les dits éléments un U, l'arête extérieure de chaque portion d'aile de chacun des dits éléments en U étant positionnée tellement près de l'arête extérieure d'une portion d'aile de l'élément en U adjacent que substantiellement tout le courant de traitement devra s'écouler à travers les dites ouvertures; caractérisé en ce que la section ouverte totale des dites ouvertures (26, 34) est moindre que la section ouverte totale de la dite pluralité de fentes (24, 32).

2. Elément de tamis suivant la revendication 1, caractérisé en ce que le dite élément de tamis est cylindrique avec les éléments profilés (20, 28) parallèles à l'axe du cylindre et les éléments en U (22, 30) transversaux par rapport à l'axe du cylindre, chaque élément en U (22, 30) étant sans fin de façon à assurer un support du type par cerceaux de l'élément de tamis.

3. Elément de tamis suivant la revendication 2, caractérisé en ce que les dits éléments profilés (20) sont situés sur la face intérieure du cylindre et les éléments en U (22) sont situés sur la face extérieure du cylindre.

4. Elément de tamis suivant la revendication 2, caractérisé en ce que les dits éléments profilés (28) sont situés sur la face extérieure du cylindre et les éléments en U (30) sont situés sur la face intérieure du cylindre.

5. Elément de tamis suivant la revendication 1, caractérisé en ce que le dit élément de tamis (50) est substantiellement plan.

6. Elément de tamis suivant la revendication 1, caractérisé en ce que la section ouverte totale des ouvertures (34, 26) est suffisamment petite, lorsque la face de l'élément de tamis constituée d'éléments en U est disposée à l'amont du courant de traitement, pour induire dans le courant de traitement une chute de pression qui l'amènera à être distribué de façon substantiellement uniformé à travers les fentes (32', 24).

7. Utilisation d'un élément de tamis suivant l'une ou l'autre des revendications précédentes, pour supporter un lit de matière particulaire et distribuer un courant de traitement dans le lit d'une manière relativement uniforme, les fentes de l'élément de tamis (50, 12) ayant une largeur inférieure à la dimension de la matière particulaire constituant le lit.

8. Un assemblage pour supporter un lit annulaire (16) de matière particulaire et distribuer un courant de traitement dans le lit d'une manière relativement uniforme, comprenant une paire d'éléments de tamis (12, 14) cylindriques concentriques, définissant entr'eux le lit (16), chacun des dits éléments de tamis (12, 14) étant conforme à la revendication 1, avec les dits éléments de tamis disposés de façon telle que les surfaces fendues se font face, caractérisé en ce que la section ouverte totale des dites ouvertures (26 ou 34) de l'un des éléments de tamis (12 ou 14) de la dite paire est moindre que la section ouverte totale des dites ouvertures (34 ou 26) de l'autre des éléments de tamis (14 ou 12) de la dite paire, disposition par laquelle un des éléments de tamis induit dans le courant de traitement une chute de pression qui l'amènera à être distribué de façon substantiellement uniform à travers les fentes qui recouvrent les éléments en U de cet élément de tamis.

9. Un assemblage suivant la revendication 8, caractérisé en ce que les éléments profilés (20, 28) de chaque élément de tamis (12, 14) s'étendent dans la direction axiale du lit annulaire (16).

10. Un assemblage suivant la revendication 8 ou 9, caractérisé en ce que la section ouverte totale des ouvertures (34) de l'élément de tamis intérieur (14) est moindre que la section ouverte totale des ouvertures (26) de l'élément de tamis extérieur (12).

0 062 716

Fig. 1

Fig. 2 — PRIOR ART

Fig. 3

Fig. 4

Fig. 7

Fig. 5

Fig. 6